Europäisches Patentamt
European Patent Office
Office européen des brevets

Veröffentlichungsnummer: **0 275 038 A2**

# EUROPÄISCHE PATENTANMELDUNG

Anmeldenummer: 88100150.7

Int. Cl.[4] C08G 65/40 , C08L 71/00

Anmeldetag: 08.01.88

Priorität: 14.01.87 DE 3700810

Veröffentlichungstag der Anmeldung: 20.07.88 Patentblatt 88/29

Benannte Vertragsstaaten: BE DE FR GB NL

Anmelder: BASF Aktiengesellschaft
Carl-Bosch-Strasse 38
D-6700 Ludwigshafen(DE)

Erfinder: Heinz, Gerhard, Dr.
Im Vogelsang 2
D-6719 Weisenheim(DE)
Erfinder: Koch, Juergen, Dr.
Woogstrasse 36
D-6708 Neuhofen(DE)
Erfinder: Eggersdorfer, Manfred, Dr.
Hannongstrasse 18
D-6710 Frankenthal(DE)
Erfinder: Henkelmann, Jochem, Dr.
Ludwigshafener Strasse 44
D-6704 Mutterstadt(DE)
Erfinder: Muenstedt, Helmut, Dr.
An dem Altenbach 41
D-6706 Wachenheim(DE)
Erfinder: Ittemann, Peter, Dr.
Wilhelm-Busch-Strasse 87
D-6700 Ludwigshafen(DE)

## Hochtemperaturbeständige Polyaryletherketone.

Hochtemperaturbeständige Polyaryletherketone, aufgebaut aus
A) 50 bis 100 mol% wiederkehrenden Einheiten der allgemeinen Formel I

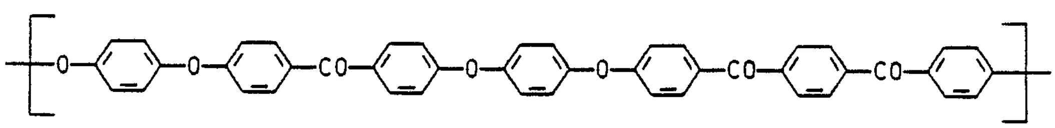

I

oder deren kernsubstituierten $C_1$-$C_8$-Alkyl, $C_1$-$C_8$-Alkoxy, Aryl-, Chlor-oder Fluorderivaten und
B) 0 bis 50 mol% von I verschiedenen wiederkehrenden Einheiten der allgemeinen Formeln II und oder III

EP 0 275 038 A2

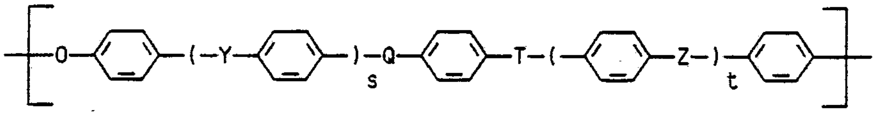

II

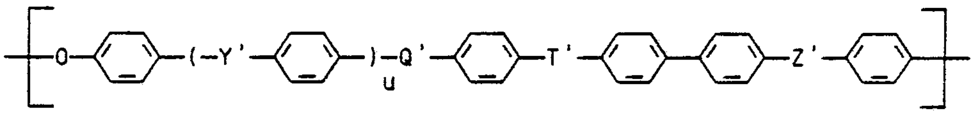

III

oder deren kernsubstituierten $C_1$-$C_8$-Alkyl-, $C_1$-$C_8$-alkoxy-, Aryl-, Chlor-oder Fluorderivaten
wobei Q, Q', Y, Y', T, T', Z und Z' -O-, -CO-oder eine chemische Bindung sein können und mindestens einer dieser Substituenten eine -CO-Gruppe ist, und s, t und u jeweils den Wert 0 oder 1 haben.

# Hochtemperaturbeständige Polyaryletherketone

Die Erfindung betrifft hochtemperaturbeständige Polyaryletherketone, aufgebaut aus
A) 50 bis 100 mol% wiederkehrenden Einheiten der allgemeinen Formel I

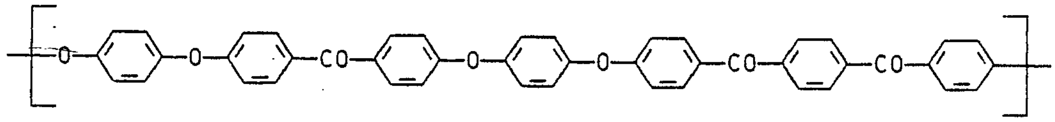 I

oder deren kernsubstituierten $C_1$-$C_8$-Alkyl, $C_1$-$C_8$-Alkoxy, Aryl-, Chlor-oder Fluorderivaten und
B) 0 bis 50 mol% von I verschiedenen wiederkehrenden Einheiten der allgemeinen Formeln II und oder III

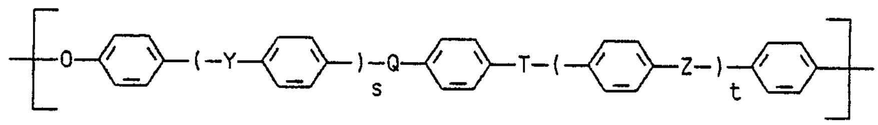 II

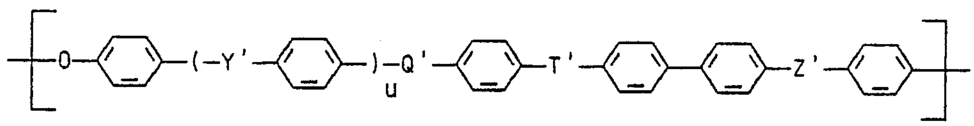 III

oder deren kernsubstituierten $C_1$-$C_8$-Alkyl-, $C_1$-$C_8$-Alkoxy-, Aryl-, Chlor-oder Fluorderivaten wobei Q, Q', Y, Y', T, T', Z und Z' -O-, -CO-oder eine chemische Bindung sein können und mindestens einer dieser Substituenten eine -CO-Gruppe ist, und s, t und u jeweils den Wert 0 oder 1 haben.

Weiterhin betrifft die Erfindung die Verwendung derartiger Polyaryletherketone zur Herstellung von Formkörpern sowie Formkörper, die diese Polyaryletherketone als wesentliche Komponenten enthalten.

Außerdem betrifft die Erfindung Blends derartiger Polyaryletherketone mit an sich bekannten Polyarylethersulfonen.

Aus der EP-A 1879 sind Polyaryletherketone mit wiederkehrenden Einheiten der Formel

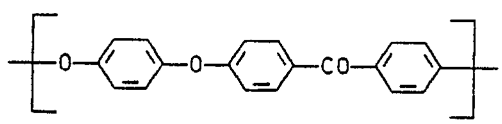

die bis zu 50 mol% andere Polyaryletherketon-Einheiten enthalten können, bekannt. Diese Produkte weisen jedoch eine für manche Anwendungszwecke nicht voll zufriedenstellende Wärmebeständigkeit auf. Hinzu kommt, daß das in dieser Anmeldung als Monomere eingesetzte 4,4'-Difluorbenzophenon sehr teuer ist.

Aufgabe der vorliegenden Erfindung war es daher, Polyaryletherketone mit guter Wärmeformbeständigkeit zur Verfügung zu stellen, die auch aus kostengünstigen Monomeren hergestellt werden können.

Diese Aufgabe wird erfindungsgemäß durch die eingangs definierten hochtemperaturbeständigen Polyaryletherketone gelöst.

Gemäß einer ersten bevorzugten Ausführungsform sind die erfindungsgemäßen Polyaryletherketone ausschließlich aus wiederkehrenden Einheiten der allgemeinen Formel I aufgebaut:

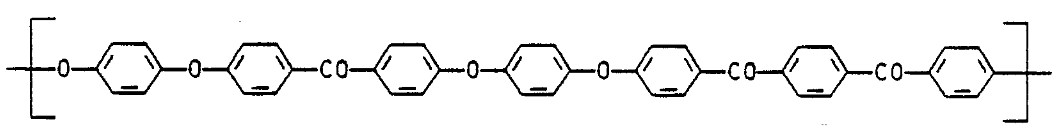 I

Derartige Produkte wären nach einer allgemein üblichen Klassifizierung mit PEEKEEKK (E steht für Ether-, K für Ketobrücke) zu bezeichnen.

Grundsätzlich können die aromatischen Einheiten mit $C_1$-$C_8$-Alkyl-, $C_1$-$C_8$-Alkoxy-, Aryl-, Cl-oder Fluorgruppen substituiert sein. Beispiele derartiger Substituenten sind Methyl, Ethyl, i-Propyl, n-, i-und t-Butyl,

die entsprechenden Alkoxygruppen sowie Phenoxygruppen. Im allgemeinen werden jedoch die unsubstituierten Derivate bevorzugt.

Die Herstellung derartiger Polyaryletherketone kann nach an sich bekannten nukleophilen oder elektrophilen Verfahren erfolgen.

Als erste Variante eines Herstellungsverfahrens ist die Polykondensation von Dihydroxyverbindungen mit Dihalogenverbindungen zu nennen, die allgemein bekannt ist.

Im vorliegenden Fall können dabei z.B. 4.4'-Di-(4-hydroxyphenoxy)-benzophenon und 1.4-Di-(4-fluorbenzoyl)-benzol oder 4,4'-Di[4-(4-hydroxyphenoxy)benzoyl]benzol und 4.4'-Difluorbenzophenon als Monomere eingesetzt werden.

1,4-Di-(4-fluorbenzoyl)-benzol und 4,4'-Difluorbenzophenon als solche wie auch Verfahren zu deren Herstellung sind an sich bekannt und in der Literatur beschrieben.

1.4-Di-(4-fluorbenzoyl)benzol hat die Formel

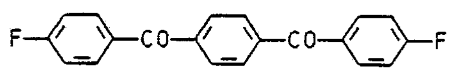 ,

4.4'-Di(4-hydroxyphenoxy)benzophenon

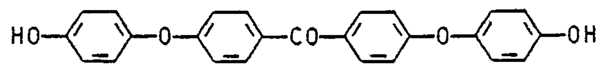

kann durch Umsetzung von 4.4'-Dichlorbenzophenon mit einem Alkalisalz von Hydrochinonmono-t-butylether zum 4.4'-Di(4-t-butoxyphenoxy)benzophenon und anschließende Spaltung des t-Butylethers hergestellt werden.

Auf dem prinzipiell gleichen Weg kann 4.4'-Di[4-(4-hydroxyphenoxy)-benzoyl]benzol

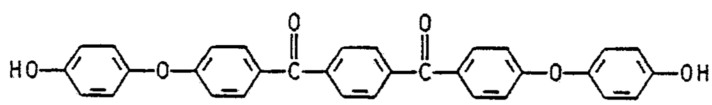

durch Verwendung von 1,4-Di(4-chlorbenzoyl)benzol anstelle von 4,4'-Dichlorbenzophenon hergestellt werden.

Die Verfahrensbedingungen der einzelnen Umsetzungsstufen bei der Herstellung der obigen Monomeren entsprechen den allgemein für derartige Reaktionen bekannten Bedingungen, so daß sich hier nähere Angaben erübrigen.

Die Verfahrensbedingungen zur Herstellung der erfindungsgemäßen Polyaryletherketone wie Temperatur, Druck, geeignete Lösungsmittel und evtl. Zusätze (Katalysatoren) sind die gleichen, wie sie in der EP-A 1879 beschrieben sind, so daß sich hier nähere Angaben erübrigen.

Besonders geeignet ist die Umsetzung in aprotischen polaren Lösungsmitteln in Gegenwart von wasserfreien Alkalicarbonaten als Basen. Eine besonders bevorzugte Kombination ist Diphenylsulfon als Lösungsmittel und $K_2CO_3$ als Base.

Die Menge an Diphenylsulfon beträgt im allgemeinen 5 bis 100 mol, vorzugsweise 5 bis 20 mol, bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur liegt im allgemeinen im Bereich von 150 bis 400°C, vorzugsweise 250 bis 400°C und insbesondere 250 bis 350°C; die Gesamt-Reaktionsdauer richtet sich nach dem gewünschten Kondensationsgrad, liegt aber im allgemeinen im Bereich von 0,1 bis 15 Stunden.

Im Anschluß an die Polykondensation können zur Stabilisierung freie Phenolat-Endgruppen mit einem Aryl-oder Alkylierungsmittel, wie z.B. Methylchlorid, umgesetzt werden. Dies erfolgt vorzugsweise bei Temperaturen von bis zu 350°C, wobei die untere Temperaturgrenze durch die Löslichkeit des Polymeren im eingesetzten Lösungsmittel bestimmt wird.

Die Aufarbeitung der Reaktionsprodukte kann nach üblichen, an sich bekannten Verfahren erfolgen. Vorteilhaft wird aus der Schmelze ein feinteiliges Gut erzeugt, welches durch Extraktion mit einem geeigneten Lösungsmittel, z.B. Aceton, vom Lösungsmittel (z.B. Diphenylsulfon) befreit wird. Anschließend können Reste von Alkalimetallcarbonat und Alkalimetallfluorid durch Extraktion mit Wasser entfernt werden.

Die Bedingungen für die Herstellung auf elektrophilem Weg, d.h. einer anderen Herstellungsvariante nach der bekannten Friedel-Crafts-Acylierung sind z.B. in der EP-A 124 276 oder EP-A 138 990 und der US-A-3 956 240 beschrieben.

Bei der elektrophilen Polymerisation werden in der Regel Monomere mit Carboxyl-oder Carboxylderivatgruppen mit Monomeren, die aktivierte Wasserstoffatome enthalten, in Gegenwart von Katalysatoren in Lösungsmitteln umgesetzt. Art und Menge von Katalysatoren und Lösungsmitteln sind in den bereits genannten EP-A 124 276, EP-A 138 990 und US-A-3 956 240 beschrieben, so daß sich hier nähere Angaben erübrigen. Zum Aufbau von wiederkehrenden Einheiten der allgemeinen Formel I können bei der elektrophilen Synthese Terephthaloylchlorid und 4,4'-Di[(4-phenoxy)-phenoxy]benzophenon eingesetzt werden, wobei letzteres Monomer wiederum aus der Umsetzung von 2 mol p-Hydroxydiphenylether mit 1 mol 4,4'-Dichlorbenzophenon erhalten werden kann.

Diese Umsetzung folgt der Summengleichung

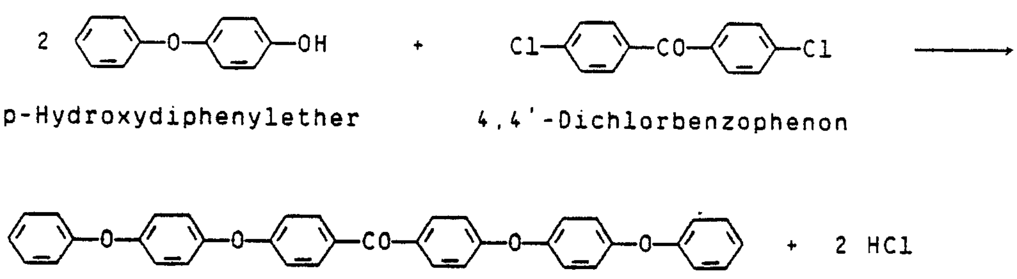

p-Hydroxydiphenylether

4,4'-Dichlorbenzophenon

4,4'-Di[(4-phenoxy)phenoxy]benzophenon

Die Molekulargewichte (Gewichtsmittelwerte) der erfindungsgemäßen Polyaryletherketone, die sich nur aus Einheiten der Formel I aufbauen, liegen im allgemeinen im Bereich von 10.000 bis 150.000, vorzugsweise von 15.000 bis 100.000.

Gemäß einer weiteren Ausführungsform enthalten die erfindungsgemäßen Polyaryletherketone noch bis zu 50, insbesondere 5 bis 45 und besonders bevorzugt 10 bis 40 mol% an wiederkehrenden Einheiten der allgemeinen Formeln II und oder III

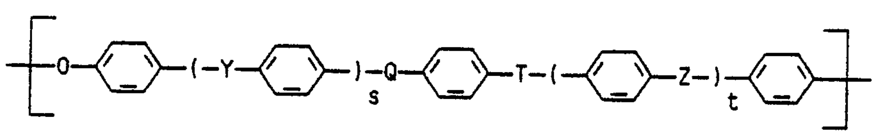

II

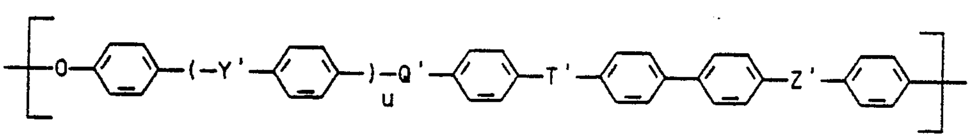

III

oder deren kernsubstituierten $C_1$-$C_8$-Alkyl-, $C_1$-$C_3$-Alkoxy-, Aryl-, Chlor-oder Fluorderivaten wobei Q, Q', Y, Y', T, T', Z und Z' -O-, -CO-oder eine chemische Bindung sein können und mindestens einer dieser Substituenten eine -CO-Gruppe ist, und s, t und u jeweils den Wert 0 oder 1 haben.

Beispiele für Einheiten der allgemeinen Formeln II und III sind:

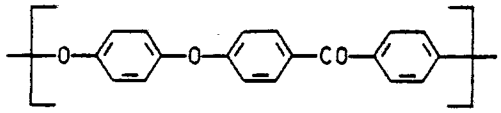

(II1)

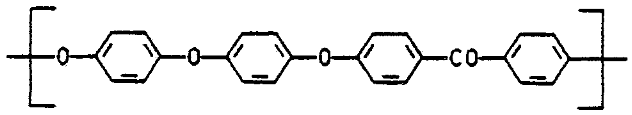

(II2)

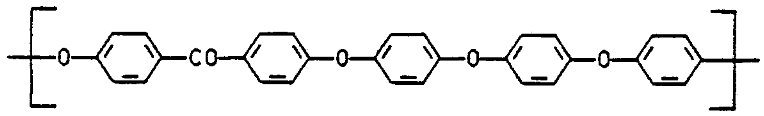

(II3)

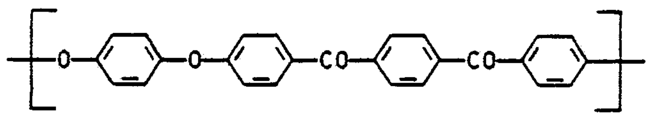

(II4)

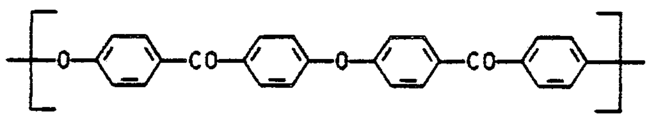

(II5)

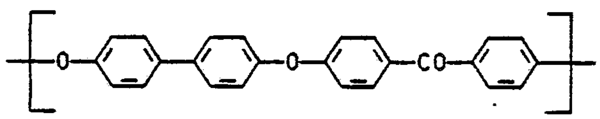

(II6)

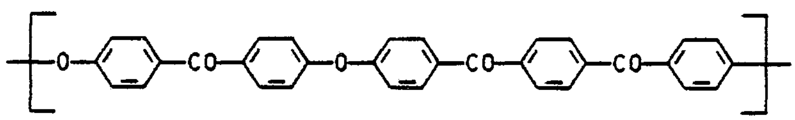

(II7)

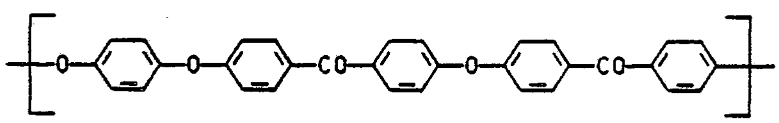

(II8)

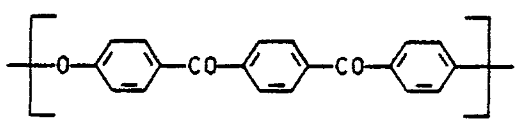

(II9)

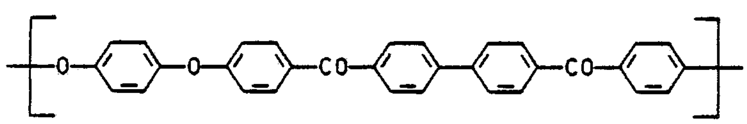

(III1)

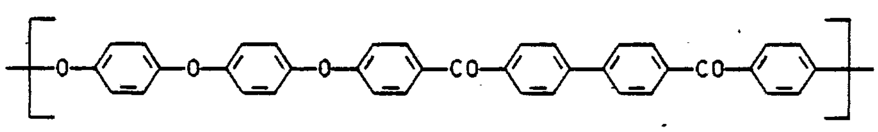

(III2)

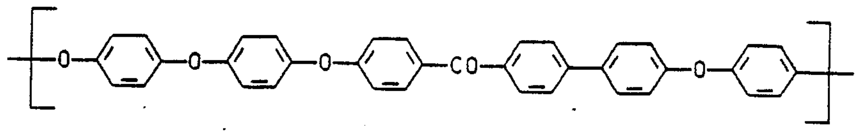

(III3)

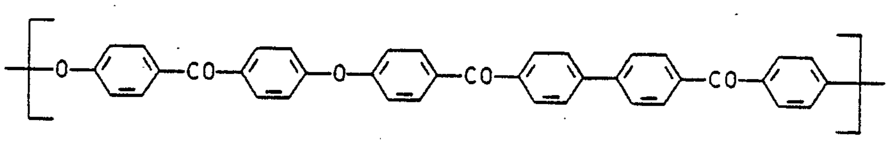

(III4)

wobei diese Auswahl nur stellvertretend für die unter die allgemeinen Formeln II und III fallenden Einheiten steht. Über die Substituenten Y, T, Z bzw. Y', T' und Z' und die Parameter s, t und u lassen sich die vorstehenden Beispiele wie folgt beschreiben:

| | s | t | Y | T | Z | Q |
|---|---|---|---|---|---|---|
| II1 | 0 | 0 | - | -CO- | - | -O- |
| II2 | 1 | 0 | -O- | -CO- | - | -O- |
| II3 | 1 | 1 | -CO- | -O- | -O- | -O- |
| II4 | 0 | 1 | - | -CO- | -CO- | -O- |
| II5 | 1 | 0 | -CO- | -CO- | - | -O- |
| II6 | 1 | 0 | chem. Bdg. | -CO- | - | -O- |
| II7 | 1 | 1 | -CO- | -CO- | -CO- | -O- |
| II8 | 1 | 1 | -O- | -O- | -CO- | -CO- |
| II9 | 0 | 0 | - | -CO- | - | -CO- |

| | u | Y' | T' | Z' | Q' |
|---|---|---|---|---|---|
| III1 | 0 | - | -CO- | -CO- | -O- |
| III2 | 1 | -O- | -CO- | -CO- | -O- |
| III3 | 1 | -O- | -CO- | -O- | -O- |
| III4 | 1 | -CO- | -CO- | -CO- | -O- |

Obwohl grundsätzlich beliebige Kombinationen der Substituenten Y, T und Z bzw. Y', T' und Z' möglich sind, werden im allgemeinen solche Einheiten bevorzugt, in denen T und Z bzw. T' und Z' gleich sind, da die entsprechenden Monomeren in der Regel leichter zugänglich sind.

Die Einheiten der Formeln II und oder III können in den erfindungsgemäßen Polyaryletherketonen statistisch oder in Form von Blöcken eingebaut sein.

Einen statistischen Einbau erhält man einfach durch Zugabe der Monomeren, die die Einheiten II bzw. III ergeben, zur Mischung der Monomeren, die die Einheiten der allgemeinen Formel I ergeben. Einen blockweisen Aufbau erzielt man, indem man entweder vorgefertigte Blöcke aus den Einheiten I, II und III zusammenfügt oder bei der Polymerisation die Monomeren, die die verschiedenen wiederkehrenden Einheiten ergeben, in zeitlichem Abstand zugibt.

Die Verfahrensbedingungen sind grundsätzlich die gleichen, wie sie vorstehend für die Herstellung der Polyaryletherketone, die nur wiederkehrende Einheiten der allgemeinen Formel I enthalten, bereits beschrieben wurden.

Das Molekulargewicht (Gewichtsmittelwert) der Polyaryletherketone, die aus wiederkehrenden Einheiten der allgemeinen Formel I und II und oder III aufgebaut sind, liegt im allgemeinen im Bereich von 10.000 bis 150.000, vorzugsweise von 15.000 bis 100.000 und insbesondere von 18.000 bis 80.000.

Falls die wiederkehrenden Einheiten blockweise angeordnet sind, liegt das Molekulargewicht der einzelnen Blöcke im allgemeinen im Bereich von 500 bis 15000, insbesondere von 1500 bis 10000.

Gemäß einer weiteren Ausführungsform der Erfindung werden auch Mischungen von verschiedenen Polyaryletherketonen, die sich in ihrer Zusammensetzung oder - bei gleicher Zusammensetzung - in ihrem

Molekulargewicht unterscheiden können, zur Verfügung gestellt.

Die erfindungsgemäßen Polyaryletherketone können mit Füllstoffen, Pigmenten und anderen Verarbeitungshilfsmitteln abgemischt werden.

Als verstärkend wirkende Füllstoffe seien beispielsweise Asbest, Kohlefasern und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Formmassen enthalten zwischen 10 und 60 Gew.-%, vorzugsweise 20 bis 50 Gew.-%, des Verstärkungsmittels, bezogen auf das Gesamtgewicht, während die imprägnierten Glasgewebe, -matten und/oder -vliese zwischen 10 und 80 Gew.-%, vorzugsweise zwischen 30 und 60 Gew.-% Polyaryletherketone, bezogen auf das Gesamtgewicht, enthalten. Als Pigmente eignen sich beispielsweise Titandioxid, Cadmium-, Zinksulfid, Bariumsulfat und Ruß. Als andere Zusatz-und Hilfsstoffe kommen beispielsweise in Betracht Farbstoffe, Schmiermittel, wie z.B. Polytetrafluorethylen, Graphit oder Molybdändisulfid, Schleifmittel, wie z.B. Carborund, Lichtstabilisatoren und Hydrolyseschutzmittel. Auch Wollastonit, Calciumcarbonat, Glaskugeln, Quarzmehl und Bornitrid oder Mischungen dieser Füllstoffe sind verwendbar. Die Pigmente, Zusatz-und Hilfsstoffe werden üblicherweise in Mengen von 0,01 bis 10 Gew.-%, bezogen auf das Gewicht an Polyaryletherketonen, eingesetzt.

Eine weitere Ausführungsform der Erfindung betrifft Abmischungen der Polyaryletherketone, wie sie in dieser Anmeldung beschrieben werden, mit an sich bekannten Polyarylethersulfonen. Geeignete Polyarylethersulfone sind z.B. solche, die aus wiederkehrenden Einheiten in Anlehnung an die allgemeinen Formeln II und III aufgebaut sind, wobei mindestens einer der Parameter Y, T und Z bzw. Y', T' und Z' eine $SO_2$-Gruppe sein muß.

Beispiele für Polyarylethersulfone erhält man, indem man in den Formeln II1 bis II9 bzw. III1 bis III4 die CO-Gruppen durch $SO_2$-Gruppen ersetzt.

Derartige Polyarylethersulfone wie auch Verfahren zu deren Herstellung sind an sich bekannt und in der Literatur beschrieben, so daß sich hier nähere Angaben erübrigen.

Der Anteil der Polyarylethersulfone an solchen Blends beträgt im allgemeinen 10 bis 90, insbesondere 20 bis 80 Gew.%.

Die erfindungsgemäßen Polyaryletherketone zeichnen sich durch ausgewogene mechanische Eigenschaften, insbesondere durch eine gute Wärmeformbeständigkeit aus. Sie können zur Herstellung von Fasern, Folien und Formkörpern eingesetzt werden.

## Beispiel 1

79,68 g (0,2 mol) 4,4'-Di(4-hydroxyphenoxy)benzophenon, 64,46 g (0,2 mol) 4,4'-Di(4-fluorbenzoyl)-benzol, 30,41 g (0,22 mol) Kaliumcarbonat und 800 g Diphenylsulfon wurden in einem Vierhals-Glaskolben mit Rührer, Stickstoffeinlaß, Innenthermometer und Luftkühler auf 200°C erhitzt und 2 Stunden bei dieser Temperatur gehalten. Dann wurde die Temperatur auf 240°C erhöht, 1 Stunde gehalten, auf 280°C erhöht, 1 Stunde gehalten und auf 320°C erhöht und ebenfalls 1 Stunde bei dieser Temperatur gehalten.

Nach dem Erkalten der Reaktionsmasse wurde diese gemahlen. Das erhaltene feine Pulver wurde viermal 10 Minuten mit heißem Aceton, dreimal 10 Minuten mit kochendem Wasser und nochmals 5 Minuten mit Aceton gewaschen, um Diphenylsulfon und anorganische Bestandteile zu entfernen. Das so erhaltene Polymerpulver wurde bei 150°C 10 Stunden im Vakuum getrocknet. Das Polymer wies nach DSC-Messungen eine Glastemperatur von 151°C und eine Schmelztemperatur von 352°C auf. Die reduzierte Viskosität betrug 1,41 (gemessen in konz. Schwefelsäure bei 23°C, 1 g/100 ml).

Eine nach demselben Verfahren hergestellte größere Polymermenge ließ sich problemlos und ohne Änderung des Molekulargewichts bei 400°C extrudieren.

## Beispiel 2

100,50 g (0,2 mol) 1,4-Di[4-(4-hydroxyphenoxy)benzoyl]benzol, 43,64 g (0,2 mol) 4,4'-Difluorbenzophenon und 30,41 g (0,22 mol) Kaliumcarbonat wurden in 800 g Diphenylsulfon unter denselben Bedingungen wie in Beispiel 1 umgesetzt.

Das so erhaltene Polymer wies eine reduzierte Viskosität von 1,38 (gemessen in konzentrierter Schwefelsäure) auf. Die physikalischen Eigenschaften sind identisch mit dem Produkt in Beispiel 1.

## Ansprüche

1. Hochtemperaturbeständige Polyaryletherketone, aufgebaut aus
A) 50 bis 100 mol% wiederkehrenden Einheiten der allgemeinen Formel I

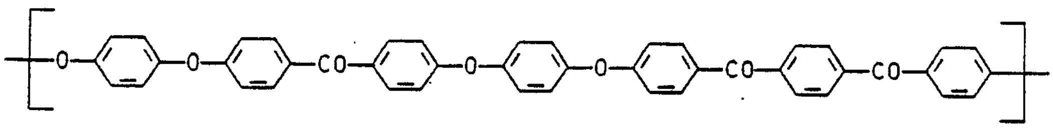

I

oder deren kernsubstituierten $C_1$-$C_3$-Alkyl, $C_1$-$C_3$-Alkoxy, Aryl-, Chlor-oder Fluorderivaten und
B) 0 bis 50 mol% von I verschiedenen wiederkehrenden Einheiten der allgemeinen Formeln II und oder III

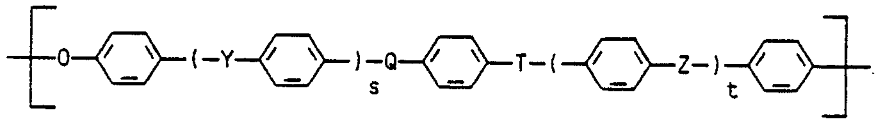

II

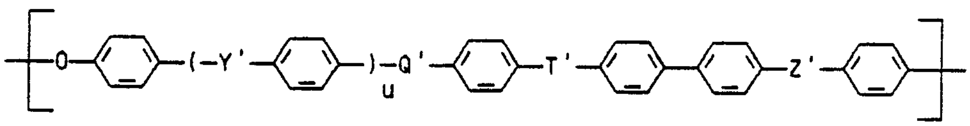

III

oder deren kernsubstituierten $C_1$-$C_3$-Alkyl-, $C_1$-$C_3$-Alkoxy-, Aryl-, Chlor-oder Fluorderivaten wobei Q, Q', Y, Y', T, T', Z und Z' -O-, -CO-oder eine chemische Bindung sein können und mindestens einer dieser Substituenten eine -CO-Gruppe ist, und s, t und u jeweils den Wert 0 oder 1 haben.

2. Hochtemperaturbeständige Polyaryletherketone nach Anspruch 1, dadurch gekennzeichnet, daß sie nur Einheiten der Formel I enthalten.

3. Hochtemperaturbeständige Polyaryletherketone nach Anspruch 1, dadurch gekennzeichnet, daß sie 5 bis 45 mol% Einheiten der Formel II enthalten.

4. Hochtemperaturbeständige Polyaryletherketone nach den Ansprüchen 1 bis 3, enthaltend 2 bis 70 Gew.% an verstärkenden Füllstoffen.

5. Hochtemperaturbeständige Polyaryletherketone nach den Ansprüchen 1 bis 4, enthalten 0.01 bis 10 Gew.% Polytetrafluorethylen, Graphit und/oder Molybdänsulfid.

6. Mischungen von hochtemperaturbeständigen Polyaryletherketonen nach den Ansprüchen 1 bis 5.

7. Mischungen aus 10 bis 90 Gew.% Polyaryletherketonen gemäß Anspruch 1 und 10 bis 90 Gew.% Polyarylethersulfonen.

8. Verwendung von hochtemperaturbeständigen Polyaryletherketonen gemäß den Ansprüchen 1 bis 6 zur Herstellung von Formkörpern.

9. Formkörper, enthaltend als wesentliche Komponenten hochtemperaturbeständige Polyaryletherketone gemäß den Ansprüchen 1 bis 6.